# EUROPEAN PATENT SPECIFICATION

(11) **EP 0 450 325 B1**
(45) Date of publication and mention of the grant of the patent: **25.06.1997**
(21) Application number: 91103291.0
(22) Date of filing: 05.03.1991
(51) Int. Cl.: G01S 5/14

(54) **Navigation apparatus for vehicles**
Navigationsgerät für Fahrzeuge
Appareil de navigation pour véhicules

(30) Priority: 06.03.1990 JP 52831/90; 15.03.1990 JP 62630/90
(43) Date of publication of application: 09.10.1991
(73) Proprietor: PIONEER ELECTRONIC CORPORATION, Meguro-ku Tokyo 153 (JP)
(72) Inventor: Yoshihara, Tohru, c/o Pioneer Electronic Corp., Kawagoe-shi, Saitama, 350 (JP); Tsujimura, Shigeru, c/o Pioneer Electronic Corp., Kawagoe-shi, Saitama, 350 (JP); Takemura, Shinichi, c/o Pioneer Electronic Corp., Kawagoe-shi, Saitama, 350 (JP); Shimakata, Masashi, c/o Pioneer Electronic Corp., Kawagoe-shi, Saitama, 350 (JP); Adachi, Masaya, c/o Pioneer Electronic Corp., Kawagoe-shi, Saitama, 350 (JP); Yoshida, Hayato, c/o Pioneer Electronic Corp., Kawagoe-shi, Saitama, 350 (JP); Ando, Hitoshi, c/o Pioneer Electronic Corp., Kawagoe-shi, Saitama, 350 (JP); Honda, Tsutomu, c/o Pioneer Electronic Corp., Kawagoe-shi, Saitama, 350 (JP)
(74) Representative: Reinhard - Skuhra - Weise & Partner

(56) References cited:
- US-A- 4 731 613
- US-A- 4 912 645
- PATENT ABSTRACTS OF JAPAN vol. 10, no. 264 (P-495)(2320) 9 September 1986 & JP-A-61 090 069

## Description

### BACKGROUND OF THE INVENTION

### Field of the Invention

This invention relates to a navigation apparatus for a vehicle which uses a GPS (Global Positioning System) receiver as a sensing means to display on a display section information on the basis of sensed results such as a present position, a running locus and the like.

### Description of the Prior Art

In the conventional navigation apparatus for a vehicle of this kind, information such as a present position, a running locus and the like on the basis of sensed results by the GPS receiver are displayed in the form of display using a predetermined marker and a predetermined bright line on a map displayed on an image plane of a display section.

When a vehicle passes through a ravine between buildings, a tunnel or the like which cannot receive radio waves from the artificial satellite, the GPS receiver becomes impossible to effect sensing.

In such a case, a final present position sensed on the display section continues to be displayed in the same form of display.

In the conventional navigation apparatus for a vehicle, in the case where the GPS receiver becomes impossible to effect sensing because the former cannot receive radio waves from the artificial satellite, the final present position sensed on the display section continues to be displayed in the same form of display. This poses an inconvenience that a user is hard to notice that a display of the present position on the display section stops, because of which the user sometimes fails to recognize an actual running position and an adequate (sufficient) running guide cannot always be given to the user.

Particularly, the navigation apparatus for a vehicle of this kind uses a display section having a relatively small display image plane. Therefore, in the case where the vehicle runs at a normal speed, even if a display point displaying a present position on the display section is moved, movement of the display point cannot be recognized immediately but the user becomes aware of a difference between the actual running position and the present position displayed on the display section after passage of much time.

This invention has been accomplished in order to overcome the aforementioned inconveniences and provides a navigation apparatus for a vehicle which can immediately confirm on the basis of a variation of a display state of a present position on the display section that movement of the present position stops and which can prevent an actually running present position from being mistaken.

Furthermore, in the conventional navigation apparatus, it is contemplated that the GPS receiver becomes impossible to effect sensing when the number of artificial satellites capable of receiving radio waves is short, and when the vehicle passes through a ravine between buildings, a tunnel or the like not capable of receiving radio waves from the artificial satellite though the number of artificial satellites capable of receiving radio waves is enough.

In such a case, displaying of information such as a present position, a running locus and the like so far carried is discontinued and final information such as a final present position sensed on the image plane of the display section or the running locus to the final present position continue to be displayed on the display section.

In the conventional navigation apparatus for a vehicle, when the GPS receiver becomes impossible to effect sensing, the final present position displayed on the image plane of the display section does not move but remains stopped, and the running locus remains unchanged.

Judgement is not made so that such a state results from the short of the number of artificial satellites capable of receiving radio waves or from that the number of artificial satellites capable of receiving radio waves is enough but radio waves from the artificial satellites are cut off. This poses inconveniences that the final present position or the running locus to the final present position continues to be displayed despite the short of the number of artificial satellites capable of receiving radio waves to thereby cause an user (a driver) to mistake a running position, and that the user makes such a mistake that the number of artificial satellites capable of receiving radio waves despite the transient cutoff of radio waves and as a result, the user turns off the power source of the navigation apparatus for a vehicle.

This invention has been accomplished in order to overcome the aforementioned inconveniences and further provides a navigation apparatus for a vehicle which can precisely inform of the fact that sensing is impossible due to the short of the number of artificial satellites capable of receiving radio waves or sensing is impossible because the number of artificial satellites capable of receiving radio waves is enough but radio waves from the artificial satellites are cut off.

### SUMMARY OF THE INVENTION

In a navigation apparatus for a vehicle according to a first aspect of this invention, in the case where a GPS receiver becomes impossible to effect sensing because the receiver cannot receive radio waves from an artificial satellite, the sensed final present position is displayed in the form of display changed.

In a navigation apparatus for a vehicle according to a second aspect of the invention, the form of display changed comprises a flickering display.

In a navigation apparatus for a vehicle according to a third aspect of the invention, the form of display changed is continued till sensing by the GPS receiver becomes enabled again.

In a navigation apparatus for a vehicle according to a fourth aspect of the invention, displaying of a present position is resumed from a point at which sensing by the GPS receiver becomes enabled again.

Accordingly, it is possible to immediately confirm on the basis of the change in display state of the present position on the display section that movement of the present position stops, and possible to prevent an actually running present position from being mistaken.

In a navigation apparatus for a vehicle acccording to another aspect of the invention, in the case where sensing by the GPS receiver becomes disabled due to the short of the number of artificial satellites capable of receiving radio waves, time at which sensing becomes enabled again on the basis of the almanac data from the artificial satellite or waiting time till that time is displayed on the display section.

In a navigation apparatus for a vehicle according to still another aspect of the invention, in the case where sensing by the GPS receiver becomes diabled due to the fact that the number of artificial satellites capable of receiving radio waves is enough but radio waves from the artificial satellites are cut off, final information on the basis of the sensed result is displayed in the form of display changed on the display section.

Accordingly, the user can look at the time on the display section or waiting time or the final information with the form of display changed to thereby precisely grasp whether sensing becomes disabled due to the short of the number of artificial satellites capable of receiving radio waves or sensing becomes disabled because the number of artificial satellites capable of receiving radio waves is enough but radio waves from the artificial satellites are cut off.

### BRIEF DESCRIPTION OF THE DRAWINGS

FIG. 1 is a block diagram showing the structure of a navigation apparatus for a vehicle according to one embodiment of this invention;
FIG. 2 is a flow chart for explaining the operation of a first embodiment;
FIG. 3 is an explanatory view showing one example in which the form of display is changed according to the first embodiment;
FIG. 4 is a flow chart for explaining the operation of a second embodiment;
FIGS. 5 and 6 are explanatory views showing examples of the form of display according to the second embodiment.

### DETAILED DESCRIPTION OF THE PREFERRED EMBODIMENTS

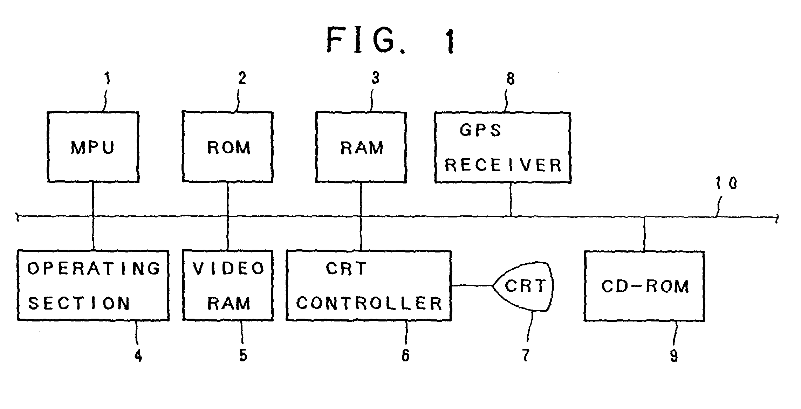

FIG. 1 is a block diagram showing the structure of a navigation apparatus for a vehicle according to one embodiment of this invention. Reference numeral 1 denotes MPU, in which a system program stored in ROM 2 is executed to thereby realize various necessary functions with RAM3 used as a work area.

A navigation apparatus for a vehicle is controlled by a microcomputer composed of MPU 1 to RAM 3.

Reference numeral 4 designates an operating section provided with ten keys for applying necessary inputs, function keys, a touch panel and the like, and 5 designates a video RAM for storing image data for one image plane portion displayed on the image plane of CRT 7. The image data stored by the video RAM 5 is delivered to a CRT controller 6 by the action of MPU 1, and a map is displayed on the image plane of CRT 7 connected to the CRT controller 6.

Reference numeral 8 designates a GPS (Global Positioning System) receiver, which as is known, receives radio waves from a plurality of artificial satellites to effect sensing. It is necessary for sensing a present position to receive radio waves from at least three or more artificial satellites.

Data of the present position sensed by the GPS receiver 8 is stored and retained in time series fashion, and the running locus can be displayed on the map displayed on the image plane of CRT 7 on the basis of the thus stored and retained data.

Reference numeral 9 designates CD-ROM in which map data displayed on the image plane of CRT 7 is stored, and the map data suitably edited by the action of the MPU 1 is delivered to the video RAM 5.

Reference numeral 10 designates a system bus, to which are connected MPU 1 to CRT 6, the GPS receiver and CD-ROM 9.

### First embodiment

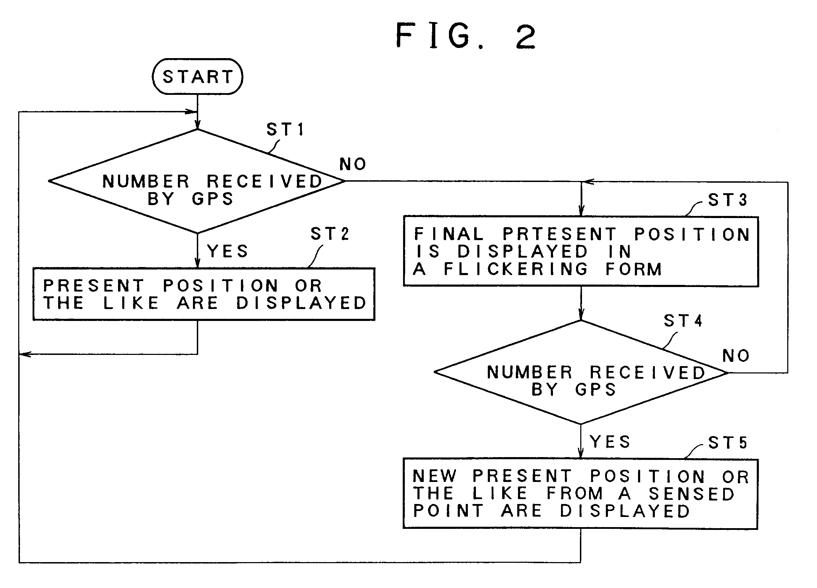

FIG. 2 is a flow chart for explaining the operation. ST1 to ST5 represent the respective steps.

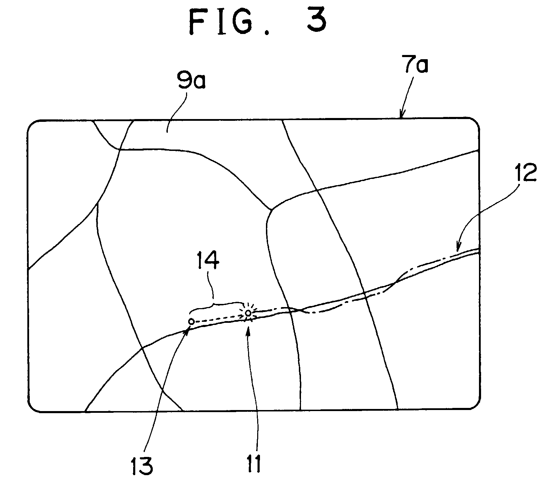

FIG. 3 is an explanatory view showing one example in which the form of display is changed. Reference numeral 7a designates a display image plane of CRT 7; 9a a map displayed on the image plane 7a; 11 a sensed final present position shown at a flicking point; 12 a running locus on the basis of the sensed present position; 13 a new present position at a point again capble of being measured shown at a bright point which continuously lights; and 14 a sense-diable section in which sensing was disabled.

Next, the operation will be described.

First, processing for displaying the present position and the running locus on the map 9a is started in the state where the map 9a is displayed on the image plane 7a of CRT 7. Determination is made if the number of artificial satellites capable of receiving radio waves is more than three (Step ST1). If the number of artificial satellites are more than three, the present position is displayed as a continuously lighting bright point as in a new present position 13 and this present position data is displayed as a running locus 12 on the basis of the stored and retained data, as shown in FIG. 3 (Step ST2).

If the number of artificial satellites capable of receiving radio waves is less than three in the determination of Step ST1), the sensed final present position 11 is displayed as a flickering point, as shown in FIG. 3, because of the state where the vehicle passes through a ravine between buildings or a tunnel (Step ST3), and thereafter, determination is made if the number of artificial satellites is more than three (Step ST4).

If the number of artificial satellites capable of receiving radio waves is less than three in the determination of Step ST4, the step advances to Step ST3. If the number of artificial satellites capable of receiving radio waves is three or more, sensing can be made and therefore, a point at which sensing is resumed is displayed as a new present position 3 as shown in FIG. 3 and a running locus is displayed as in a running locus 12.

According to this embodiment, in the case where a GPS receiver becomes impossible to effect sensing, the sensed final present position 11 is displayed in the form of display changed. Therefore, it is possible to immediately confirm on the basis of the change in display state of the present position on the display section that movement of the present position stops, and possible from being mistaken.

### Second Embodiment

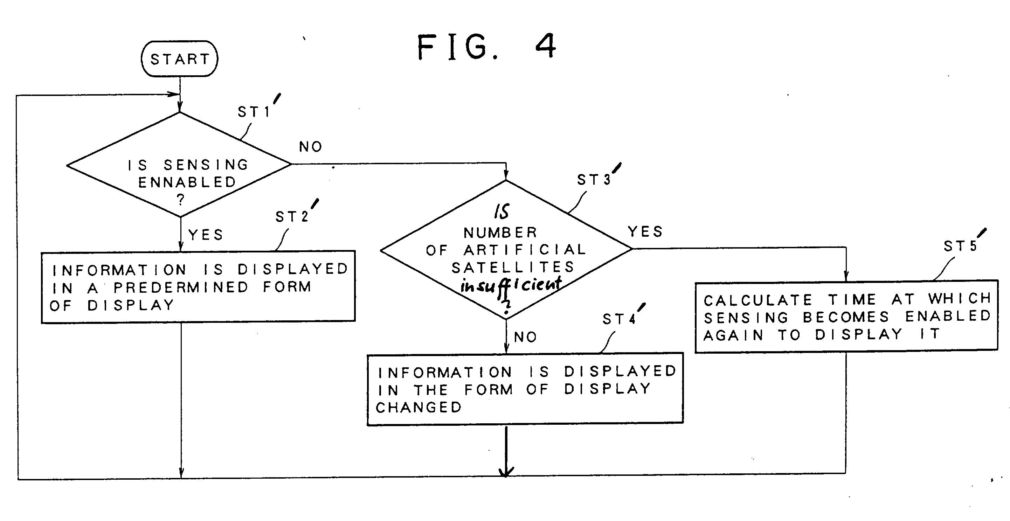

FIG. 4 is a flow chart for explaining the operation of a second embodiment. ST1 to ST5 represent respective steps.

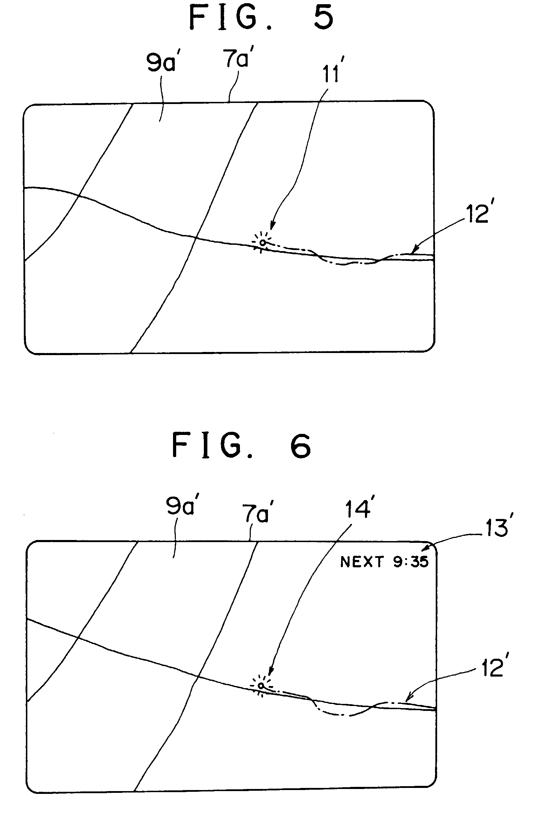

FIGS. 5 and 6 are explanatory views showing one example of the form of display. Reference numeral 7a' designates a display image plane of CRT 7, and 9a' designates a map displayed on the image plane 7a'.

Reference numeral 11' designates a present position during sensing displayed at a continuously lighting bright point; 12' a running locus on the basis of the sensed present position 11' ; 13' a sense-resume time at which sensing becomes enabled again; and 14' a sensed final present position displayed at a flickering point.

Next, the operation will be described.

First, processing for displaying the present position and the running locus on the map 9a' in the state where the map 9a' is displayed on the image plane 7a' of CRT 7. Determination is made if sensing can be made (Step ST 1'). If sensing can be made, the present position 11' and the running locus 12' are displayed in the predetermined form of display as shown in FIG. 5 (Step ST2').

If sensing is disabled in the determination of Step ST 1', determination is made if the number of artificial satellites capable of receiving radio waves is less than three (Step ST 3'). If the number of artificial satellites capable of receiving radio waves is less than three, sensing is disabled due to the short of the number of artificial satellites capable of receiving radio waves and therefore, time (sense-resume time 13') at which sensing becomes enabled again is calculated on the basis of the amalnac data from the artificial satellites. The sense-resume time 13' is displayed at the right upper corner of the image plane 7a' (Step ST 4'), as shown in FIG. 6.

If the number of artificial satellites capable of receiving radio waves is three or more in the determination of Step ST 3', radio waves from the artificial satellites are cut off to thereby render sensing impossible. Therefore, the final present position 14' is displayed as shown in FIG. 6 (Step ST 5').

After Steps ST 2', ST 4' and ST 5', the step advances to Step ST 1'.

Accordingly, according to the above-described embodiment, in the case where the sensing by the GPS receiver 8 becomes disabled, whether the sensing is disabled due to the short of the number of artificial satellites capable of receiving radio waves or the sensing is disabled due to the fact that the number of artificial satellites capable of receiving radio waves is enough but radio waves from the artificial satellites are cut off is informed by displaying the sense-resume time 13' or the final present position 14 on the image plane 7a' of CRT 7. Therefore, the user can look at the sense-resume time 13' or the final present positino 14' on the image plane 7a' to thereby precisely grasp the cause of disablement of sensing.

While in the above-described embodiment, an example has been described in which the sense-resume time 13' at which sensing becomes enabled again is displayed, it is to be noted that a waiting time till sensing becomes enabled again may be used.

Furthermore, while in the foregoing, an example has been described in which the form of display of the final present position 14' out of the final information is changed, it is to be noted that the form of display of the running locus 12 alone may be changed or the form of display of the running locus 12 may be changed.

Moreover, while in the foregoing, an example has been described in which the form of diaplay of the final information is changed to the flickering state, it is to be noted that color of display may be changed or brightness may be changed.

As described above, according to this invention, in the case where sensing becomes disabled because the GPS receiver cannot receive radio waves from the artificial satellites, the sensed final present position is displayed in the display form of flickering till sensing becomes enabled again or the display of the present position is resumed from the present position at which sensing becomes enabled again. Therefore, when sensing becomes enabled again after the sensing has been disabled, the form of display is returned to the original form of display after the form of display for displaying the present position of the display section has been changed, and the display of the present position is resumed from the point at which sensing becomes enabled again.

Accordingly, the user can immediately confirm on the basis of the change in the display state of the present position of the display section that movement of the present position stops. Therefore, there is an effect that the actually running present position can be prevented from being mistaken.

Moreover, according to the present invention, in the case where the sensing by the GPS receiver becomes disabled, whether the sensing is disabled due to the short of the number of artificial satellites capable of receiving radio waves or the sensing is disabled due to the fact that the number of artificial satellites capable of receiving radio waves is enough but radio waves from the artificial satellites are cut off are informed by displaying the time at which sensing becomes enabled again or the wating time till that time and the final information on the display section in the changed form of display. Therefore, the user can look at the display section to precisely grasp the casue of disablement of the sensing.

## Claims

1. A navigation apparatus for a vehicle using a GPS (Global Positioning System) receiver for receiving position signals as sensing means in which information on the basis of sensed results such as a present position, a running locus are displayed in a predetermined form of display on a displaying means, wherein said apparatus comprises:
means for determining if the position signals received are sufficient for converting the position signals into present position information;
means for converting the position signals into the present position information;
means for displaying running locus information as a displayed running locus;
means for displaying a sensed final present position information in a first form as display information whenever said determining means determines that the position signals received are sufficient for converting the position signals into the sensed final present position information;
characterized in that
said apparatus further comprises:
means for changing the sensed final present position information in the first form into an altered form of the display information whenever said determining means determines that the position signals received are not sufficient for converting the position signals into the final present position information,
wherein the display information displayed in the first form and the display information displayed in the altered form are displayed respectively at a sensed final position of the displayed running locus.

2. The vehicle navigation system according to claim 1,
characterized in that
the running locus information is obtained from previously received position signals used previously by said converting means and said displaying means for displaying the display information in the first form.

3. A navigation apparatus according to claim 1 or 2, wherein the form of display to be changed is continued till the sensing by the GPS receiver (8) becomes enabled again.

4. A navigation apparatus according to claim 1, wherein the display of the present position is resumed from a point at which the sensing by the GPS receiver (8) becomes enabled again.

5. A navigation apparatus according to claim 1, wherein in the case where the sensing by said GPS receiver (8) becomes disabled due to a short of the number of artificial satellites capable of receiving radio waves, time at which sensing becomes enabled again or waiting time till that time is displayed on said display section (7) on the basis of almanac data from said artificial satellites.

6. A navigation apparatus according to claim 5, wherein in the case where the sensing by said GPS receiver (8) becomes disabled due to the fact that the number of artificial satellites capable receiving radio waves is enough but radio waves from said artificial satellites cannot be received, final information on the basis of the sensed results is displayed with the form of display changed on the display section (7).

## Patentansprüche

1. Navigationsgerät für ein Fahrzeug mit Benutzung eines GPS (Globales Positionierungssystem)-Empfängers zum Empfangen von Positionssignalen als eine Erfassungseinrichtung, bei der Information basierend auf erfaßten Resultaten, wie z.B. einer augenblicklichen Position, eines veränderlichen Orts, in einer vorbestimmten Form von Anzeige auf einer Anzeigeeinrichtung angezeigt werden, wobei die Vorrichtung aufweist:
eine Einrichtung zum Bestimmen, ob die empfangenen Positionssignale zum Umwandeln der Positionssignale in Information über die augenblickliche Position genügen;
eine Einrichtung zum Umwandeln der Positionssignale in die Information über die augenblickliche Position;
eine Einrichtung zum Anzeigen der Information über den veränderlichen Ort als ein angezeigter veränderlicher Ort;
eine Einrichtung zum Anzeigen einer erfaßten endgültigen Information über die augenblickliche Position in einer ersten Form als Anzeigeinformation immer dann, wenn die Bestimmungseinrichtung bestimmt, daß die empfangenen Positionssignale zum Umwandeln der Positionssignale in die erfaßte endgültige Information über die augenblickliche Position genügen;
dadurch gekennzeichnet, daß die Vorrichtung weiterhin aufweist:
eine Einrichtung zum Ändern der erfaßten endgültigen Information über die augenblickliche Position in der ersten Form in eine geänderte Form der Anzeigeinformation, immer dann, wenn die Bestimmungseinrichtung bestimmt, daß die empfangenen Positionssignale nicht zum Umwandeln der Positionssignale in die endgültige Information über die augenblickliche Position genügen,
wobei die Anzeigeinformation, die in der ersten Form angezeigt wird, und die Anzeigeinformation, die in der geänderten Form angezeigt wird, jeweils an einer erfaßten endgültigen Position des angezeigten veränderlichen Orts angezeigt werden.

2. Fahrzeugnavigationssystem nach Anspruch 1, dadurch gekennzeichnet, daß
die Information über den veränderlichen Ort von zuvor empfangenen Positionssignalen, die zuvor durch die Umwandlungseinrichtung und die Anzeigeeinrichtung zum Anzeigen der Anzeigeinformation der ersten Form benutzt wurden, erhalten wird.

3. Navigationsvorrichtung nach Anspruch 1 oder 2, dadurch gekennzeichnet, daß
die Form der zu ändernden Anzeige fortgeführt wird, bis die Erfassung durch den GPS-Empfänger (8) wieder aktiviert wird.

4. Navigationsvorrichtung nach Anspruch 1, dadurch gekennzeichnet, daß die Anzeige der augenblicklichen Position von einem Punkt wiederaufgenommen wird, an dem die Erfassung durch den GPS-Empfänger (8) wieder aktiviert wird.

5. Navigationsvorrichtung nach Anspruch 1, dadurch gekennzeichnet, daß in dem Fall, in dem die Erfassung durch den GPS-Empfänger (8) aufgrund eines Mangels an der Anzahl von künstlichen Satelliten, die in der Lage sind Radiowellen zu empfangen, deaktiviert wird, die Zeit, zu der die Erfassung wieder aktiviert wird, oder die Wartezeit bis zu dieser Zeit auf dem Anzeigeabschnitt (7) auf der Basis von Almanach-Daten von den künstlichen Satelliten angezeigt wird.

6. Navigationsvorrichtung nach Anspruch 5, dadurch gekennzeichnet, daß in dem Fall, in dem die Erfassung durch den GPS-Empfänger (8) aufgrund der Tatsache, daß die Anzahl von künstlichen Satelliten, die in der Lage sind Radiowellen zu empfangen, groß genug ist, aber Radiowellen von den künstlichen Satelliten nicht empfangen werden können, deaktiviert wird, die endgültige Information auf der Basis der erfaßten Resultate angezeigt wird, wobei die Anzeigeform auf dem Anzeigeabschnitt (7) geändert wird.

## Revendications

1. Dispositif de navigation pour un véhicule utilisant un récepteur GPS (8) (système de positionnement global), destiné à recevoir des signaux de position, comme moyen de détection, dans lequel des informations basées des résultats détectés tels qu'une position courante (11, 11'), un lieu de déplacement (12, 12'), sont affichées dans un format d'affichage prédéterminé sur un moyen d'affichage (7), dans lequel ledit dispositif comprend:
un moyen destiné à déterminer si les signaux de position reçus sont en nombre suffisant pour convertir les signaux de position en information de position courante;
un moyen destiné à convertir les signaux de position en information de position courante;
un moyen destiné à afficher l'information de lieu de déplacement sous forme de lieu de déplacement affiché;
un moyen destiné à afficher une information de dernière position courante détectée dans un premier format comme information d'affichage dans le cas où ledit moyen de détermination détermine que les signaux de position reçus sont en nombre suffisant pour convertir les signaux de position en information de dernière position courante détectée;
caractérisé en ce que
ledit dispositif comprend en outre:
un moyen destiné à modifier le format de l'information de dernière position courante détectée du premier format en un format d'affichage d'information modifié dans le cas où ledit moyen de détermination détermine que les signaux de position reçus ne sont pas en nombre suffisant pour convertir les signaux de position en information de dernière position courante,
dans lequel l'information d'affichage affichée dans le premier format et l'information d'affichage affichée dans le format modifié sont affichées respectivement à une dernière position détectée du lieu de déplacement affiché.

2. Système de navigation de véhicule selon la revendication 1, caractérisé en ce que:
l'information de lieu de déplacement est obtenue à partir des signaux de position reçus antérieurement, qui ont été utilisés antérieurement par ledit moyen de conversion et ledit moyen d'affichage pour afficher l'information d'affichage dans le premier format.

3. Dispositif de navigation selon la revendication 1 ou 2, dans lequel le format d'affichage à modifier est conservé jusqu'à ce que la détection par le récepteur GPS (8) devienne de nouveau possible.

4. Dispositif de navigation selon la revendication 1, dans lequel l'affichage de la position courante est repris à partir d'un point pour lequel la détection par le récepteur GPS (8) devient de nouveau possible.

5. Dispositif de navigation selon la revendication 1, dans lequel, dans le cas où la détection par ledit récepteur GPS (8) devient impossible compte tenu d'une insuffisance du nombre de satellites artificiels capables de recevoir les ondes radio, l'instant à partir duquel la détection deviendra de nouveau possible, ou la durée d'attente de cet instant, est affiché sur ladite section d'affichage (7) sur la base des données d'almanach issues desdits satellites artificiels.

6. Dispositif de navigation selon la revendication 5, dans lequel, dans le cas où la détection par ledit récepteur GPS (8) devient impossible bien que le nombre de satellites artificiels capables de recevoir les ondes radio soit suffisant, mais compte tenu que les ondes radio issues desdits satellites artificiels ne peuvent pas être reçues, la dernière information basée des résultats détectés est affichée dans le format d'affichage modifié sur la section d'affichage (7).
